(19) Europäisches Patentamt
European Patent Office
Office européen des brevets

(11) **EP 0 541 927 B1**

(12) **EUROPÄISCHE PATENTSCHRIFT**

(45) Veröffentlichungstag und Bekanntmachung des Hinweises auf die Patenterteilung:
**24.01.1996 Patentblatt 1996/04**

(51) Int. Cl.[6]: **B64G 1/50**, F28D 7/08

(21) Anmeldenummer: **92115637.8**

(22) Anmeldetag: **12.09.1992**

(54) **Verdampfungswärmetauscher**

Evaporative heat exchanger

Echangeur de chaleur à évaporation

(84) Benannte Vertragsstaaten:
**FR GB IT**

(30) Priorität: **11.11.1991 DE 4136969**

(43) Veröffentlichungstag der Anmeldung:
**19.05.1993 Patentblatt 1993/20**

(73) Patentinhaber: **Daimler-Benz Aerospace Aktiengesellschaft**
**D-80995 München (DE)**

(72) Erfinder: **Leidinger, Bernhard, Prof. Dr.**
**W-2803 Weyhe-Leeste (DE)**

(74) Vertreter: **Hansmann, Dierk, Dipl.-Ing. et al**
**D-22767 Hamburg (DE)**

(56) Entgegenhaltungen:
**EP-A- 0 405 078          DE-A- 3 041 754**
**DE-A- 3 212 066          GB-A- 2 078 360**

**Beschreibung**

Die Erfindung betrifft einen Verdampfungswärmetauscher mit wenigstens einem aktiven Flüssigkeitskühlkreislauf zum Abführen von Wärme in Raumfahrzeugen unter Schwerelosigkeit sowie bei unterschiedlichen Beschleunigungen mit einem Raum, der wenigstens ein Einlaßventil für ein zu verdampfendes Medium aufweist, und mit voneinander beabstandeten Kühlflüssigkeitskanälen, zwischen denen das zu verdampfende Medium leitbar ist und die aus einem Bündel von senkrecht zur Hauptströmungsrichtung des zu verdampfenden Mediums parallel zueinander angeordneten Röhrchen bestehen, wobei jeweils zwei in bezug auf die Hauptströmungsrichtung des zu verdampfenden Mediums aufeinander folgende Röhrchen zur Bildung einer Wendelstruktur miteinander verbunden sind.

Bei Raumfahrzeugen, die sich in der Auf- oder Abstiegsphase durch die Erdatmosphäre befinden oder die in der Erdumlaufbahn extremen thermischen Belastungen ausgesetzt sind, gilt es, eine sichere und zuverlässige Wärmeabfuhr zu gewährleisten.

Aus der DE-PS 37 18 873 ist bereits ein Verdampfungswärmetauscher bekannt, bei dem das zu kühlende Medium eines aktiven Flüssigkeitskreislaufes zur Wärmeabfuhr mit einem zu verdampfenden Medium in wärmeübertragenden Kontakt gebracht wird, welches in einem mitgeführten Vorratsbehälter gelagert ist. Den entstehenden Dampf bläst das Raumfahrzeug in seine Umgebung ab.

Um das zu verdampfende Medium durch eine vollständige Verdampfung möglichst optimal auszunutzen und dabei eine ausreichende hohe Wärmeübertragung zwischen dem zu verdampfenden Medium und den Kühlflüssigkeitskanälen zu erreichen, muß der entstehende Dampf von dem unverdampften Teil des Mediums getrennt werden. Hierdurch wird verhindert, daß der unverdampfte Teil in Form von größeren Flüssigkeitstropfen abgeblasen wird, ohne durch seine Verdampfung zur Kühlung ausgenutzt worden zu sein.

Bei der aus der DE-PS 37 18 873 bekannten Anordnung wurde angestrebt, durch eine gefaltete Formgebung der Kühlflüssigkeitskanäle in Strömungsrichtung nicht verdampfte Flüssigkeitsreste mit Hilfe von Massenträgheitskräften an den Wänden der Kühlflüssigkeitskanäle abzulagern, um sie dort in die Gasphase zu überführen. Untersuchungen an diesen vorbekannten Verdampfungswärmetauscher haben jedoch ergeben, daß die Ausnutzung des zu verdampfenden Mediums noch nicht optimal ist.

Um dieser Tatsache Rechnung zu tragen, ist in der EP-A-0 405 078 ein Verdampfungswärmetauscher der eingangs genannten Art bekanntgeworden, der bereits einen wesentlich verbesserten Wirkungsgrad aufweist, bei dem aber noch immer nicht auszuschließen ist, daß noch unverdampfte Flüssigkeitströpfchen an die Umgebung abgegeben werden.

Der Erfindung liegt die Aufgabe zugrunde, einen Verdampfungswärmetauscher der eingangs genannten Gattung so auszubilden, daß das zu verdampfende Medium praktisch vollständig in die Dampfphase überführt und so für eine möglichst hohe Wärmeübertragung ausgenutzt wird.

Erfindungsgemäß wird diese Aufgabe durch die im Patentanspruch 1 gekennzeichneten Merkmale gelöst. Vorteilhafte Weiterbildungen des erfindungsgemäßen Wärmetauschers, die insbesondere der Optimierung der Anordnung dienen, sind in den weiteren Ansprüchen angegeben.

Durch die erfindungsgemäß vorgesehenen Variationen des Abstandes zwischen zwei in Hauptströmungsrichtung des zu verdampfenden Mediums aufeinander folgenden parallelen Röhrchen wird erreicht, daß sich in dem aufgrund der Verdampfung zunehmenden Volumenstrom des verdampften Mediums, vorzugsweise Wasser oder Ammoniak, eine konstante Strömungsgeschwindigkeit und damit besonders günstige Wärmeübertragungsbedingungen einstellen. Indem gemäß der Erfindung der Abstand benachbarter Röhrchen unmittelbar in der Nähe der Einlaßventile zunächst konstant gehalten wird und dann kontinuierlich zunimmt, wird der Tatsache Rechnung getragen, daß sich eine solche konstante Strömungsgeschwindigkeit erst in einigem Abstand hinter den Einlaßventilen erreichen läßt.

Die Zunahme des Abstandes läßt sich dabei vorzugsweise durch folgende mathematische Beziehung beschreiben:

$$\alpha_1 = c_0 + c_1 \cdot \frac{X}{L} \qquad c_0, c_1 = \text{Konstanten} \frac{X}{L} > = \text{relativer Abstand von Düse bis Mündung}$$

Neben dem Vorteil eines hohen Wirkungsgrades und, infolge der möglichen hohen Packungsdichte des Rohrbündels, eines geringen Volumens weist der erfindungsgemäße Wärmetauscher überdies den Vorteil auf, daß er leicht herzustellen, zu warten und zu überprüfen ist.

Zwar ist bereits aus der GB-A-2 078 360 ein Wärmetauscher bekanntgeworden, bei dem mehrere, zu einer Wendelstruktur zusammengefaßte Röhrchen einen variierenden Abstand voneinander aufweisen. Anders als der Wärmetauscher gemäß der Erfindung ist dieser bekannte Wärmetauscher jedoch nicht der Gattung der Verdampfungswärmetauscher zuzurechnen, sondern enthält einen Kühlkreislauf für ein zu kondensierendes Medium wie Wasser- oder Ammoniakdampf, wobei die Abführung des Kondensats bei diesem bekannten Wärmetauscher durch die Schwerkraft erfolgt.

Die in weiterer Ausgestaltung der Erfindung vorgesehene spezielle Formgebung der einzelnen Kühlmittelröhrchen dient der weiteren Optimierung der Wärmeübertragungsverhältnisse bei gleichzeitig möglichst geringem Druckverlust sowohl des zu kühlenden Kreislaufs - die Pumpenleistung wird minimiert - als auch des zu verdampfenden Mediums auf dem Weg von Einlaßventil zur Austrittsöffnung - die Verdampfungstemperatur kann bei geringem Druck sehr niedrig liegen -. Dem gleichen Zweck dient schließlich auch die Maßnahme, die Röhrchen mit einer rauhen, kapillaren Oberfläche zu versehen. Dadurch werden die Haltekräfte verstärkt, und es wird eine gute Benetzung mit dem zu verdampfenden Medium erreicht.

Im folgenden soll die Erfindung anhand eines in der Zeichnung dargestellten bevorzugten Ausführungs-beispiels näher erläutert werden. Es zeigen:

Fig. 1    einen Längsschnitt durch einen Verdampfungswärmetauscher,

Fig. 2    eine seitliche Draufsicht auf die zu einer Ebene gehörenden, zu einer Wendel zusammengefaßten Röhrchen,

Fig. 3    einen Schnitt gemäß III-III durch die in Fig. 1 gezeigte Anordnung und

Fig. 4    eine Darstellung eines Abschnittes eines abgeplatteten Röhrchens für Kühlflüssigkeitskanäle mit entsprechenden Querschnittsdarstellungen.

In den Figuren sind jeweils gleiche Bauteile mit den gleichen Bezugszeichen versehen.

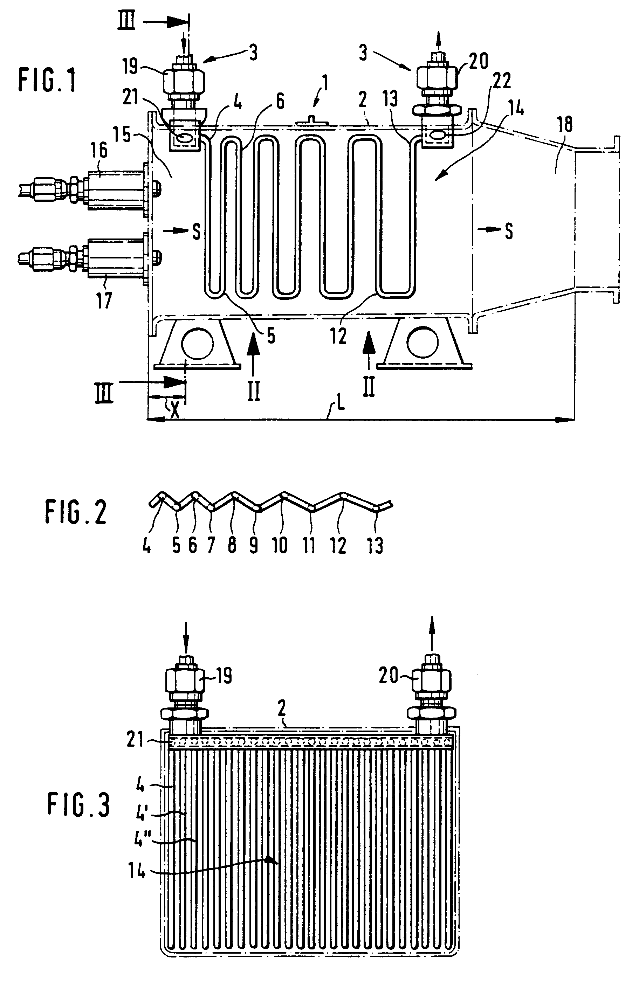

In Fig. 1 ist ein schematisierter Längsschnitt durch einen Verdampfungswärmetauscher 1 dargestellt. Der Verdampfungswärmetauscher 1 besitzt ein Gehäuse 2, in das ein aktiver Flüssigkeitskühlkreislauf 3, beispielsweise der Wasseroder R114-Kühlkreislauf eines Raumfahrzeuges oder des Hydrauliköls, in Form eines quer zur Längsrichtung des Verdampfungswärmetauschers angeordneten , aus einzelnen Röhrchen 4 bis 13 bestehenden Rohrbündels 14 eingesetzt ist.

Im Gehäuse 2 des Verdampfungswärmetauschers 1 ist an einem Ende, und zwar an der in Fig. 1 linken Seite, ein Raum 15 vorgesehen, in den über Einlaßventile 16 und 17 aus einem hier nicht dargestellten Vorratsbehälter ein zu verdampfendes Medium, beispielsweise Wasser und/oder Ammoniak, eingeleitet werden kann. Das andere Ende des annähernd rechteckförmigen Gehäuses 11 wird von einer Dampfaustrittsmündung 18 gebildet.

Der aktive Kühlkreislauf 3 besitzt einen Einlaß 19 und einen Auslaß 20. Zwischen dem Einlaß 19 und dem Auslaß 20 verlaufen senkrecht zur Strömungsrichtung des zu verdampfenden Mediums die Kühlflüssigkeitskanäle, die vom Rohrbündel 14 gebildet werden.

Das Rohrbündel 14 besteht dabei, wie insbesondere aus der in Fig. 2 gezeigten Schnittdarstellung hervorgeht, aus mehreren, parallel zueinander angeordneten Rohrlagen, hier dargestellt anhand von übereinanderliegend angeordneten Röhrchen 4,4',4" usw. Jede dieser Rohrlagen besteht ihrerseits aus einer Anzahl von Röhrchen 4 bis 13, die jeweils, wie aus der Draufsicht in Fig. 1 zu erkennen ist, über gekrümmte Bereiche miteinander verbunden und so jeweils zu einer Rohrwendel zusammengefaßt sind. Die aus diesen Rohrwendeln bestehenden Rohrlagen sind über senkrecht sowohl zur Strömungsrichtung, die in der Fig. 1 durch den mit "S" gekennzeichneten Pfeil charakterisiert ist, als auch zu den Röhrchen 4 bis 13 verlaufende Verteilungs- bzw. Sammelrohre 21 und 22 mit dem Einlaß 19 bzw. Auslaß 20 für das Kühlmittel verbunden.

Die einzelnen zu einem Rohrbündel 14 gehörenden Röhrchen 4 bis 13 weisen dabei in ihren jeweils parallelen Teilbereichen unterschiedliche Abstände voneinander auf. Wie aus Fig. 1 ersichtlich ist, ist der Abstand im Fall des hier dargestellten Ausführungsbeispiels zwischen den ersten drei benachbart liegenden Röhrchen 4 bis 6 gleich groß, nimmt dann aber zwischen je zwei Röhrchen jeweils ums einen konstanten Faktor zu.

Aus dem Verteilungsrohr 21 strömt das Kühlmittel des aktiven Kühlkreislaufes 3 in die Kühlflüssigkeitskanäle des Rohrbündels 14, um dann über das Sammelrohr 22 und den Auslaß 20 die Anordnung wieder zu verlassen.

Vorteilhaft für die Wirkungsweise des vorstehend beschriebenen Wärmetauschers als Tropfenfallenverdampfer ist, daß zwei jeweils zu einer solchen Rohrwendel gehörige, aufeinanderfolgende Röhrchen, beispielsweise die Röhrchen 4 und 5, in bezug auf die von der Rohrwendel gebildete Ebene, die in Fig. 1 der Zeichenebene entspricht, gegeneinander höhenversetzt angeordnet sind. Dies verdeutlicht auch die Darstellung in Fig 3. Die jeweils zwei aufeinanderfolgende Röhrchen verbindenden gekrümmten Bereiche bilden dabei mit dieser Ebene einen Winkel zwischen etwa 15 und 45 Grad, so daß sich insgesamt eine gefaltete Struktur jeder einzelnen Rohrwendel ergibt. Da die übereinanderliegend angeordneten Rohrwendel jeweils parallel zueinander ausgerichtet sind, ergibt sich somit die bereits erwähnte, durch den Höhenversatz gestaffelte Anordnung, so daß jede folgende Rohrreihe in der Lücke der vorhergehenden steht.

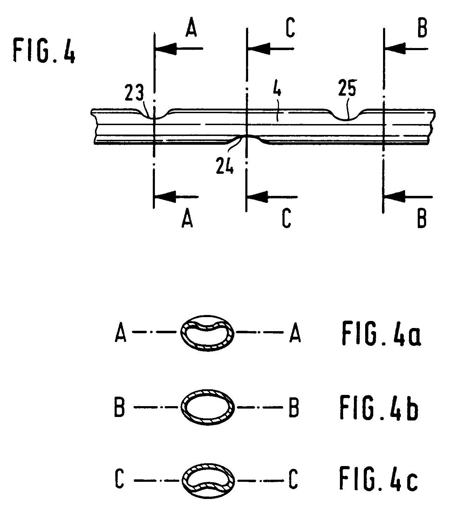

Die einzelnen Röhrchen 4 bis 13 sind, wie in Fig. 4 am Beispiel des Röhrchens 4 gezeigt ist, abgeplattet ausgebildet. Die verschiedenen Schnitte A-A, B-B und C-C veranschaulichen dabei den Röhrchenquerschnitt.

Der Rohrabschnitt 4 besteht im wesentlichen aus einem abgeplatteten Rohr, dessen Innendurchmesser bei dem hier dargestellten Ausführungsbeispiel vor dem Fressen 2,51 mm betrug. Der Rohrabschnitt weist zur Erzeugung von Verwirbelungen in der Kreislaufströmung Eindrückungen 23-25 auf, die zu einem guten Wärmeübertragungsverhalten beitragen. Die Eindrückungen 23-25 sind abwechselnd in gleichen Abständen an der Oberseite und der Unterseite des abgeplatteten Röhrchens 4 vorgesehen. Der Abstand beträgt bei einer bevorzugten Ausgestaltung etwa 4,25 mm. Der durch die Eindrückungen 23-25 des Röhrchens 4 gebildete Querschnitt ist aus den Querschnittsansichten A-A, C-C zu erkennen.

Eine bevorzugte Länge für den geraden Bereich der Röhrchen 4 bis 13 beträgt 95 mm. Der bündelartige Aufbau des aktiven Kühlkreislaufes 3 setzt sich bei einer vorgesehenen Ausführungsform aus 23 Lagen mit je 10 Röhrchen, somit aus 230 Röhrchen zusammen.

Bei dem Verdampfungswärmetauscher 1 wird der Volumenstrom des zu verdampfenden Mediums, beispielsweise Wasser, mit Hilfe der Eingangsventile 16 und 17 gesteuert, die ihrerseits von nicht dargestellten Magneten im Pulsbetrieb je kurzzeitig geöffnet werden.

Das zu verdampfende Medium wird mit einem Förderdruck, der oberhalb des Siededrucks im Verdampfungsraum liegt, durch die Einlaßventile 16 und 17 in den Raum 15 gedrückt. Aufgrund des hier vorherrschenden geringeren Druckes verdampft bei ca. 60°C Speisetemperatur des Kühlmittels ein kleiner Teil des zu verdampfenden Mediums, bei Wasser ca. 5-8 % auf die Masse bezogen, adiabatisch und kühlt dadurch das zu verdampfende Medium ab.

Das durch diesen ersten Verdampfungsvorgang im Raum 15 entstandene Gas vermischt sich mit den verbliebenen Flüssigkeitstropfen und bildet eine durch die Gasexpansion zunächst beschleunigte Zweiphasenströmung, deren volumenbezogene Bestandteile bei Verwendung von 25°C warmem Wasser etwa zu 99,95 % Wasserdampf und 0,05 % Wasser sind, falls der Druck im Verdampfungsraum etwa 5 bis 10 mbar beträgt.

Diese Zweiphasenströmung wird nun um die Rohre des Rohrbündels 14 des Kühlkreislaufes 3 geleitet. Der Kühlkreislauf 3 kann dabei in nicht dargestellter Weise aus mehreren separaten Kühlflüssigkeitskreisläufen bestehen.

Die Kühlflüssigkeit in den vorgenannten Kühlkreisläufen transportiert in an sich bekannter Weise Wärme von Wärmeerzeugern zu den Kühlflüssigkeitskanälen, die den eigentlichen Verdampfungswärmetauscher bilden, wobei an den Oberflächen der Kühlflüssigkeitskanäle Wärme an das zu verdampfende Medium übertragen und dieses verdampft wird. Der durch den Wärmeaustausch entstandene Dampf verläßt anschließend über die Dampfaustrittsmündung 18 das Raumfahrzeug.

Bei dem Durchtritt durch die das Rohrbündel 14 bildenden Kühlflüssigkeitskanäle erfahren die in der Gasphase mitgerissenen Flüssigkeitstropfen aufgrund ihrer Massenträgheit eine Abweichung von der Gasströmungsrichtung und prallen gegen nahegelegene Kühlflüssigkeitskanalaußenwände. Dort bilden sie mit anderen Flüssigkeitstropfen einen Flüssigkeitsfilm, der teilweise verdampft. Aufgrund der Staffelung der einzelnen Röhrchen stellen diese für die Flüssigkeitstropfen eine nach Art eines Tropfenabscheiders wirkende erhitzte Abscheidevorrichtung dar, wobei die Röhrchen des Rohrbündels 14 als Ablenkflächen dienen. An den Faltstellen der Kühlflüssigkeitskanäle bilden sich aus den unverdampften Resten des Flüssigkeitsfilms neue Tropfen, die von der Zweiphasenströmung mitgerissen und an einer anderen Stelle erneut an einer Kühlflüssigkeitskanalaußenwandfläche gelagert werden. Dadurch, daß der Abstand benachbarter Röhrchen eines Rohrbündels 14 mit wachsender Entfernung von den Einlaßventilen 16 und 17 kontinuierlich zunimmt, stellt sich nach kurzer Zeit eine weitgehend konstante Strömungsgeschwindigkeit des Volumenstroms ein, die zu einer vollständigen Verdampfung mit einem hervorragenden Wirkungsgrad der Wärmeübertragung führt.

**Patentansprüche**

1. Verdampfungswärmetauscher mit wenigstens einem aktiven Flüssigkeitskühlkreislauf zum Abführen von Wärme in Raumfahrzeugen unter Schwerelosigkeit sowie bei unterschiedlichen Beschleunigungen mit einem Raum, der wenigstens ein Einlaßventil für ein zu verdampfendes Medium aufweist, und mit voneinander beabstandeten Kühlflüssigkeitskanälen, zwischen denen das zu verdampfende Medium leitbar ist und die aus einem Bündel von senkrecht zur Hauptströmungsrichtung des zu verdampfenden Mediums parallel zueinander angeordneten Röhrchen bestehen, wobei jeweils zwei in bezug auf die Hauptströmungsrichtung des zu verdampfenden Mediums aufeinander folgende Röhrchen zur Bildung einer Wendelstruktur miteinander verbunden sind, dadurch gekennzeichnet, daß der Abstand zweier aufeinander folgender Röhrchen (4-13) mit zunehmender Entfernung vom Einlaßventil (16,17) in der Weise variiert, daß der Abstand zweier benachbarter Röhrchen (4-13) mit zunehmender Entfernung vom Einlaßventil (16,17) größer wird, wobei dem Einlaßventil (16,17) benachbart zunächst einige Reihen von Röhrchen (4-7) mit gleichbleibendem Abstand vorgesehen sind.

2. Verdampfungswärmetauscher nach Anspruch 1, dadurch gekennzeichnet, daß jeweils zwei in bezug auf die Hauptströmungsrichtung des zu verdampfenden Mediums aufeinander folgende Röhrchen (4-13) bezüglich einer in der Hauptströmungsrichtung verlaufenden Ebene alternierend höhenversetzt zueinander angeordnet sind.

3. Verdampfungswärmetauscher nach Anspruch 2, dadurch gekennzeichnet, daß der Versatz der in der Hauptströmungsrichtung aufeinanderfolgenden Röhrchen (4-13) derart erfolgt, daß die jeweils folgende Reihe in der Lücke der vorhergehenden steht.

4. Verdampfungswärmetauscher nach einem der Ansprüche 1 bis 3, dadurch gekennzeichnet, daß die Röhrchen (4-13) abgeflacht sind.

**EP 0 541 927 B1**

5. Verdampfungswärmetauscher nach einem der Ansprüche 1 bis 4, dadurch gekennzeichnet, daß jedes abgeflachte Röhrchen (4-13) zur Verbesserung der Wärmeübertragung zusätzliche Eindrückungen (23-25) aufweist.

6. Verdampfungswärmetauscher nach Anspruch 5, dadurch gekennzeichnet, daß die Eindrückungen (23-25) jedes Röhrchens (4-13) abwechselnd und im gleichen Abstand an der Ober- und/oder Unterseite des Röhrchens vorgesehen sind.

7. Verdampfungswärmetauscher nach einem der Ansprüche 1 bis 6, dadurch gekennzeichnet, daß die Röhrchen (4-13) eine Oberfläche mit einer kapillaren Struktur aufweisen.

8. Verdampfungswärmetauscher nach einem der Ansprüche 1 bis 7, dadurch gekennzeichnet, daß die Röhrchen (4-13) des Rohrbündels die Gehäusewände zur Vermeidung von Vereisungen kontaktieren.

9. Verdampfungswärmetauscher nach einem der Ansprüche 1 bis 8, dadurch gekennzeichnet, daß als zu verdampfendes Medium Wasser verwendet wird.

10. Verdampfungswärmetauscher 1 bis 8, dadurch gekennzeichnet, daß als zu verdampfendes Medium Ammoniak verwendet wird.

11. Verdampfungswärmetauscher 1 bis 8, dadurch gekennzeichnet, daß als zu verdampfendes Medium nacheinander sowohl Wasser als auch Ammoniak verwendet wird.

## Claims

1. Evaporation heat exchanger with at least one active fluid cooling circuit for dissipating heat in spacecraft under conditions of zero gravity and at differing rates of acceleration, with a chamber which has at least one inlet valve for a medium to be evaporated and with coolant channels spaced from one another, between which the medium to be evaporated is capable of being conducted and which consist of a bundle of small tubes arranged parallel to one another and perpendicular to the main flow direction of the medium to be evaporated, whereby each two tubes which are successive with respect to the main flow direction of the medium to be evaporated are connected to one another with a view to forming a coiled structure, characterised in that the spacing of two successive tubes (4-13) varies with increasing distance from the inlet valve (16,17) in such a way that the spacing of two adjacent tubes (4-13) becomes greater with increasing distance from the inlet valve (16,17), whereby several rows of tubes (4-7) adjacent to the inlet valve (16,17) are provided with constant spacing.

2. Evaporation heat exchanger according to Claim 1, characterised in that each two tubes (4-13) which are successive with respect to the main flow direction of the medium to be evaporated are arranged alternately offset in height in relation to one another with respect to a plane extending in the main flow direction.

3. Evaporation heat exchanger according to Claim 2, characterised in that the offset of the tubes (4-13) which are successive in the main flow direction is effected in such a way that in each case the following row is located in the gap of the previous row.

4. Evaporation heat exchanger according to one of Claims 1 to 3, characterized in that the tubes (4-13) are flattened.

5. Evaporation heat exchanger according to one of Claims 1 to 4, characterised in that each flattened tube (4-13) has additional indentations (23-25) with a view to improving the transfer of heat.

6. Evaporation heat exchanger according to Claim 5, characterised in that the indentations (23-25) of each tube (4-13) are provided alternately and with an equal spacing on the top and/or bottom of the tube.

7. Evaporation heat exchanger according to one of Claims 1 to 6, characterised in that the tubes (4-13) have a surface with a capillary structure.

8. Evaporation heat exchanger according to one of Claims 1 to 7, characterised in that the tubes (4-13) of the tube bundle come into contact with the walls of the casing with a view to avoiding icing up.

9. Evaporation heat exchanger according to one of Claims 1 to 8, characterised in that water is used by way of medium to be evaporated.

**10.** Evaporation heat exchanger according to one of Claims 1 to 8, characterised in that ammonia is used by way of medium to be evaporated.

**11.** Evaporation heat exchanger according to one of Claims 1 to 8, characterised in that both water and ammonia are used in succession by way of medium to be evaporated.

**Revendications**

**1.** Echangeur de chaleur à évaporation comprenant au moins un circuit de liquide de refroidissement destiné à dissiper la chaleur dans les astronefs en apesanteur et lors d'accélérations différentes, ledit échangeur de chaleur à évaporation étant constitué d'une chambre présentant au moins une soupape d'admission pour un agent devant être évaporé ainsi que de canaux pour l'écoulement du liquide de refroidissement disposés à distance l'un de l'autre et entre lesquels l'agent devant être évaporé peut être guidé, lesdits canaux étant composés d'un faisceau de tubes parallèles les uns aux autres et disposés perpendiculairement à la direction du courant principal de l'agent devant être évaporé, deux tubes consécutifs étant reliés entre eux pour former une structure en hélice par rapport à la direction du courant principal de l'agent devant être évaporé, **caractérisé en ce que** la distance séparant deux tubes consécutifs (4, 13) peut varier à partir de la soupape d'admission (16, 17) de manière croissante de telle façon que la distance séparant deux tubes voisins (4, 13) augmente à mesure que l'on s'éloigne de la soupape d'admission (16, 17) et que sont prévues quelques séries de tubes (4, 7) à une distance constante près de la soupape d'admission.

**2.** Echangeur de chaleur à évaporation selon la revendication 3, caractérisé en ce que deux tubes consécutifs (4, 13) par rapport à la direction du courant principal de l'agent devant être évaporé sont disposés de manière alternée et en décalage vertical l'un par rapport à l'autre, ce vis-à-vis d'un plan dirigé dans la direction du courant principal.

**3.** Echangeur de chaleur à évaporation selon la revendication 2, caractérisé en ce que le décalage des tubes (4, 13) consécutifs dans la direction du courant principal est tel que la série suivante se trouve dans le creux de la précédente.

**4.** Echangeur de chaleur à évaporation selon l'une ou l'autre des revendications 1 à 3, caractérisé en ce que les tubes (4, 13) sont aplatis.

**5.** Echangeur de chaleur à évaporation selon l'une ou l'autre des revendications 1 à 4, caractérisé en ce que chacun des tubes aplatis (4, 13) présente des empreintes supplémentaires (23, 25) destinées à améliorer le transfert de chaleur.

**6.** Echangeur de chaleur à évaporation selon la revendication 5, caractérisé en ce que les empreintes (23, 25) de chaque tube (4, 13) sont prévues alternativement et à distance constante sur les faces supérieure et/ou inférieure du tube.

**7.** Echangeur de chaleur à évaporation selon l'une ou l'autre des revendications 1 à 6, caractérisé en ce que les tubes (4, 13) présentent une surface ayant une structure capillaire.

**8.** Echangeur de chaleur à évaporation selon l'une ou l'autre des revendications 1 à 7, caractérisé en ce que les tubes (4, 13) du faisceau sont en contact avec les parois du bâti afin d'éviter le givre.

**9.** Echangeur de chaleur à évaporation selon l'une ou l'autre des revendications 1 à 8, caractérisé en ce que de l'eau est utilisée comme agent devant être évaporé.

**10.** Echangeur de chaleur à évaporation selon l'une ou l'autre des revendications 1 à 8, caractérisé en ce que de l'ammoniac est utilisé comme agent devant être évaporé.

**11.** Echangeur de chaleur à évaporation selon l'une ou l'autre des revendications 1 à 8, caractérisé en ce que aussi bien l'eau que l'ammoniac sont utilisés alternativement comme agents devant être évaporés.

FIG.1

FIG.2

FIG.3

FIG.4

A · · · · — · · · A    FIG.4a

B · · · · — · · · B    FIG.4b

C · · · · — · · · C    FIG.4c